# EUROPEAN PATENT APPLICATION

(11) **EP 4 156 064 A1**
(43) Date of publication of application: **29.03.2023**
(21) Application number: 21818178.2
(22) Date of filing: 01.06.2021
(51) Int. Cl.: G06Q 30/02

(54) **INFORMATION PROCESSING DEVICE AND PROGRAM**

(30) Priority: 03.06.2020 JP 2020097297
(71) Applicant: Full Life Consulting Ltd, Tokyo 150-6018 (JP)
(72) Inventor: HAYASHI Yusuke, Tokyo 150-6018 (JP)
(74) Representative: Hasegawa, Kan
(86) International application number: PCT/JP2021/020892
(87) International publication number: WO 2021/246414

(57) **Abstract**

[Problem] To provide an information processing device and program which enable an evaluator to evaluate an advertisement at an arbitrary date and time. [Solution] According to one aspect of the present invention, provided is an information processing device which receives the evaluations of advertisements that can be distributed over a network. This information processing device comprises a provision unit, a reception unit, and a calculation unit. The provision unit is configured to be able to sequentially provide a plurality of advertisements to terminals used by evaluators. The reception unit is configured to be able to receive, from the terminals, registration of evaluator information about the evaluators and evaluation inputs for the advertisements. The calculation unit is configured to be able to calculate points imparted to the evaluators on the basis of the number of evaluations and the evaluator information.

## Description

### TECHNICAL FIELD

The present invention relates to an information processing apparatus and a program.

### RELATED ART

In recent years, an amount of content distributed through the Internet has increased, and along with this increase, a number of advertising media have diversified, and a number of advertisements has also increased.

With regard to the advertisements, not only an advertiser but also a producer that created the advertisements are concerned about evaluation of the advertisements.

For this reason, a system collecting the evaluation for broadcast advertisements has been proposed (see Patent Document 1).

### PRIOR ART DOCUMENTS

### Patent Document

[Patent document 1] Patent Application Publication No. 2002-109139

### SUMMARY OF INVENTION

### Problems to be Solved by Invention

However, the system disclosed in Patent Document 1 collects the evaluation of broadcasted advertisements, i.e., advertisements that has been released to the public, thus it is difficult to obtain the evaluations of advertisements before they are released to the public, and an evaluator that evaluates the advertisements is limited to a viewer of a broadcasted content. In addition, from a perspective of the evaluator of the advertisement, there is restriction on date and time of evaluation.

In view of the above circumstances, the present invention provides an information processing apparatus and a program that allow an evaluator to evaluate an advertisement at an arbitrary date and time.

### Means for Solving Problems

According to an aspect of the present invention, there is provided an information processing apparatus configured to receive an evaluation of an advertisement that can be distributed via a network. The information processing apparatus comprises: a provision unit configured to sequentially provide a plurality of advertisements to a terminal used by an evaluator; a reception unit configured to receive, from the terminal, a registration of evaluator information in relation to the evaluator and an input of evaluation with respect to the advertisement; and a calculation unit configured to calculate a point to be given to the evaluator based on a number of the evaluation and the evaluator information.

According to an aspect of the invention, it is possible to evaluate a plurality of advertisements, including those before public release, at a date and time desired by an evaluator.

### BRIEF DESCRIPTION OF DRAWINGS

FIG. 1 is a diagram showing a connection configuration between an information processing apparatus 1 according to a first embodiment of the present invention and another apparatus.
FIG. 2 is a diagram showing a configuration of the information processing apparatus 1.
FIG. 3 is a block diagram showing a functional configuration of the information processing apparatus 1.
FIG. 4 is a block diagram showing a functional configuration of a terminal 2.
FIG. 5 is an activity diagram showing a flow of operation of the information processing apparatus 1.
FIG. 6 is a diagram showing an example of a display screen shown on the terminal 2.
FIG. 7 is a diagram showing an example of a display screen shown on the terminal 2.
FIG. 8 is a sequence diagram for illustrating an operation example of the information processing apparatus 1.

### DESCRIPTION OF EMBODIMENTS

Hereinafter, embodiment of the present invention will be described with reference to the drawings. Various features described in the embodiment below can be combined with each other.

A program for realizing a software in the present embodiment may be provided as a non-transitory computer readable medium that can be read by a computer or may be provided for download from an external server or may be provided so that the program can be activated on an external computer to realize functions thereof on a client terminal (so-called cloud computing).

In the present embodiment, the "unit" may include, for instance, a combination of hardware resources implemented by a circuit in a broad sense and information processing of software that can be concretely realized by these hardware resources. Further, various information is performed in the present embodiment, and the information can be represented by, for instance, physical values of signal values representing voltage and current, high and low signal values as a set of binary bits consisting of 0 or 1, or quantum superposition (so-called qubits), and communication/calculation can be performed on a circuit in a broad sense.

Further, the circuit in a broad sense is a circuit realized by combining at least an appropriate number of a circuit, a circuitry, a processor, a memory, and the like. In other words, it is a circuit includes application specific integrated circuit (ASIC), programmable logic device (e.g., simple programmable logic device (SPLD), complex programmable logic device (CPLD), and field programmable gate array (FPGA)), and the like.

### 1. Overall configuration

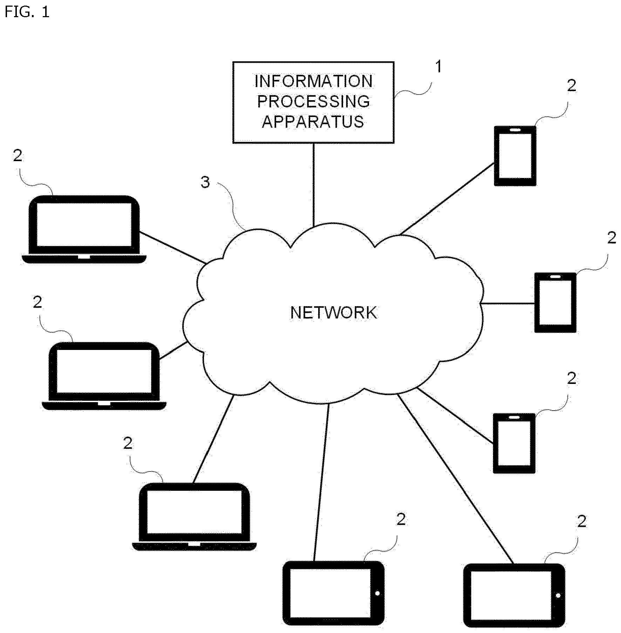

FIG. 1 is a diagram showing a connection configuration between an information processing apparatus 1 according to a first embodiment of the present invention and another apparatus. As shown in the figure, the information processing apparatus 1 is connected to a network 3. The network 3 is, for example, the Internet. The information processing apparatus 1 is communicatively connected to a plurality of terminals 2 via the network 3.

The information processing apparatus 1 accepts an evaluation of an advertisement, and a target advertisement is an advertisement that can be distributed via the network 3.

The terminal 2 is used by an evaluator that evaluates the advertisement, and may be a personal computer, a smartphone, a tablet, or the like, or may be anything that runs a web browser or dedicated software.

### 2. Configuration of information processing apparatus 1

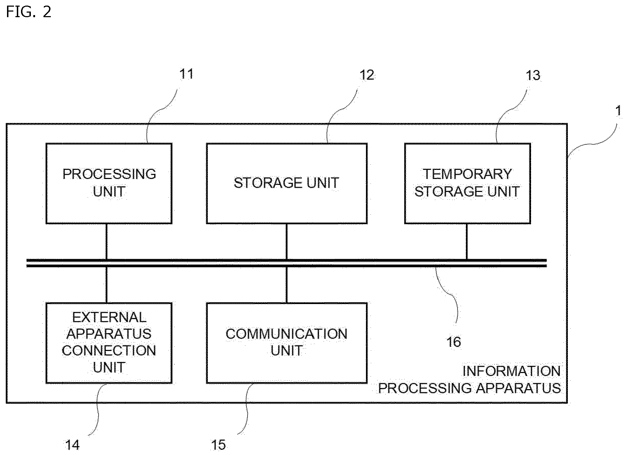

FIG. 2 is a diagram showing a configuration of the information processing apparatus 1. As shown in the figure, the information processing apparatus 1 comprises a processing unit 11, a storage unit 12, a temporary storage unit 13, an external apparatus connection unit 14, and a communication unit 15, and these components are electrically connected inside the information processing apparatus 1 via a communication bus 16.

The processing unit 11 is realized by, for instance, a central processing unit (CPU), and operates according to a predetermined program stored in the storage unit 12 to realize various functions.

The storage unit 12 is a non-volatile storage medium that stores various information. It can be realized by a storage device such as a hard disk drive (HDD) or a solid state drive (SSD). The storage unit 12 can be arranged in another apparatus that can communicate with the information processing apparatus 1.

The temporary storage unit 13 is a volatile storage medium. It can be realized by a memory such as a random access memory (RAM), and can store information (argument, array, etc.) temporarily necessary when the processing unit 11 operates.

The external apparatus connection unit 14 is, for instance, a connection unit conforming to standards such as a universal serial bus (USB) or a high-definition multimedia interface (HDMI), and is capable of connecting an input apparatus such as a keyboard or a display apparatus such as a monitor.

The communication unit 15 is, for example, communication means conforming to a local area network (LAN) standard, and realizes communication between the information processing apparatus 1 and the network 3 such as the local area network or the Internet via the local area network.

A general-purpose server computer, a personal computer, or the like can be used for the information processing apparatus 1, and the information processing apparatus 1 can be configured using a plurality of computers.

### 3. Function of information processing apparatus 1

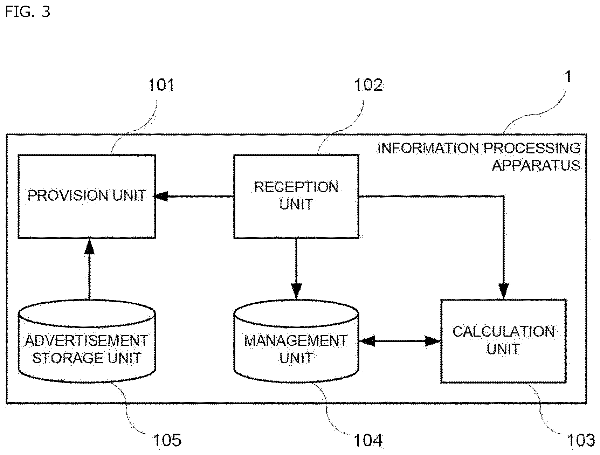

Next, function of the information processing apparatus 1 will be described. FIG. 3 is a block diagram showing a functional configuration of the information processing apparatus 1.

As shown in the figure, the information processing apparatus 1 comprises a provision unit 101, a reception unit 102, a calculation unit 103, a management unit 104, and an advertisement storage unit 105. Each functional unit of the information processing apparatus 1 is realized by allowing a computer to function as the information processing apparatus 1 by a program.

The provision unit 101 is configured to sequentially provide a plurality of advertisements to the terminal 2 used by an evaluator. Since the advertisement is provided via the network 3, although outdoor advertisement or the like, which is difficult to distribute, are excluded in principle, it is possible to distribute advertisement in an indirect form, such as only picture of outdoor advertisement, picture or video of outdoor advertisement, etc. In addition, the provision unit 101 determines a next advertisement to be provided based on emotion of the evaluator. The emotion of the evaluator emotion is accepted as input to the terminal 2 by the evaluator, but to simplify input by the evaluator, the provision unit 101 is configured to provide the terminal 2 with display information that allows an icon, representing different emotion respectively, to be displayed. However, when the terminal 2 communicating with the information processing apparatus 1 using dedicated software instead of a web browser, the provision unit 101 can omit providing the display information that allows the icon to display.

The reception unit 102 is configured to receive, from the terminal 2, a registration of evaluator information in relation to the evaluator and an input of evaluation with respect to the advertisement. The evaluator information includes a plurality of items, including an item for which registration is optional, such as name, age, gender, occupation, annual income, area of residence, hobby, estate ownership, or insurance coverage. Further, the evaluator information can also include a plurality of items with weighting respectively. For example, items that can be disclosed relatively easily, such as age, gender, occupation, or hobby, are required to be registered and given less weight, while items that are often relatively difficult to disclose, such as residential area, estate ownership, or insurance coverage, are optional and given more weight.

The reception unit 102 is configured to receive the input of evaluation with respect to the advertisement, but also receive emotion of the evaluator as at least part of the evaluation. At this time, the reception unit 102 accepts icons based on the display information provided to the terminal 2 by the provision unit 101, such as icons displayed on the terminal 2 or icons displayed by dedicated software, i.e., operations on icons in terminal 2 are accepted as at least part of the evaluation. Moreover, the reception unit 102 is configured to receive any comment input to the terminal 2 as at least part of the evaluation.

Furthermore, the reception unit 102 requests start of providing the advertisement when the evaluator evaluates the advertisement, but may receive an operation with respect to the icon at the terminal 2 as a request to start providing the advertisement.

The calculation unit 103 is configured to calculate a point to be given to the evaluator based on a number of the evaluation and the evaluator information. Specifically, when an evaluator whose evaluator information is registered evaluates an advertisement once, one point is given. A number of evaluation is, in principle, the same as a number of advertisement evaluated. However, for instance, if an evaluation is input during playback of a 15-second video advertisement, the input may also be considered as the number of evaluation. The number of advertisement is a total number, and re-evaluation of the same advertisement is also included in the number of evaluations. In addition, the calculation unit 103 is configured to add a point to be given to the evaluator according to a number of registered item in the evaluator information. At this time, the calculation unit 103 may add a point to be given to the evaluator according to a sum of weight corresponding to the registered item in the evaluator information. In other words, the greater the number of item in the registered evaluator information, the higher the number of points given per evaluation. Moreover, if item with relatively heavy weighting is included, the number of points will be further increased.

The management unit 104 stores various information, including the evaluator information of each evaluator received by the reception unit 102 or a number of point for each evaluator, and manages the stored information in a readable manner.

The advertisement storage unit 105 manages the advertisement provided by the provision unit 101.

### 4. Function of terminal 2

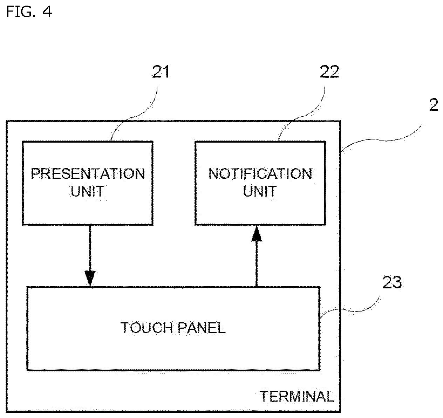

Next, function of the terminal 2 will be described. FIG. 4 is a block diagram showing a functional configuration of a terminal 2. Here, a case where the terminal 2 is operated as an advertisement evaluation apparatus by dedicated software is described as an example, and a description of a case where a web browser is operated on the terminal 2 is omitted since web browser is common.

A program that allows a computer, such as a personal computer, a smartphone, a tablet, etc., to function as an advertisement evaluation apparatus allows these computers to operate as an advertisement apparatus. The advertisement evaluation apparatus comprises a presentation unit 21, a notification unit 22, and a touch panel 23. The touch panel 23 is hardware, and when a personal computer is operated as an advertisement evaluation apparatus, it is replaced with an output unit to a display and an input unit from a pointing apparatus such as a mouse.

The presentation unit 21 is configured to present an advertisement, a registration screen of the evaluator information, etc. provided by the information processing apparatus 1 on the touch panel 23.

The notification unit 22 is configured to display a plurality of icons on the touch panel 23, each of which represents different emotion, thereby providing the information processing apparatus 1 with an operation with respect to the icon as an evaluation of the advertisement.

### 5. Operation of information processing apparatus 1

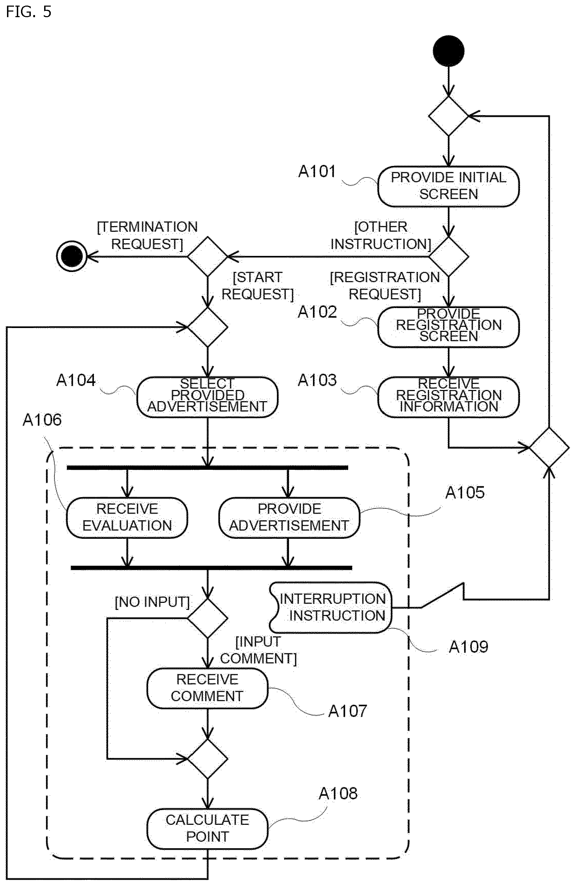

Next, an operation of the information processing apparatus 1 will be described. FIG. 5 is an activity diagram showing a flow of operation of the information processing apparatus 1.

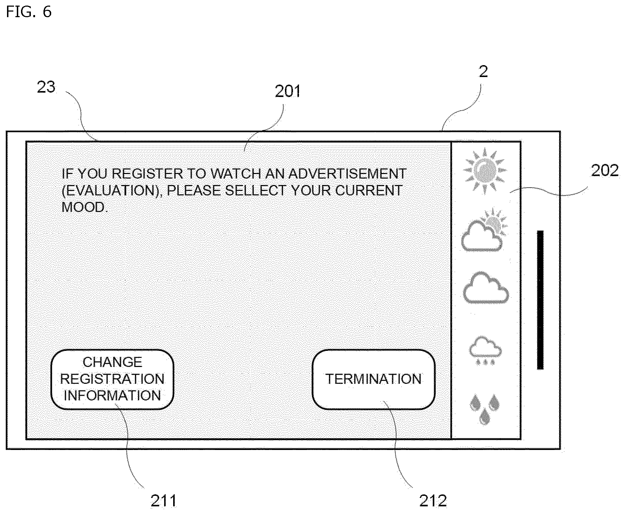

First, when the evaluator operates the terminal 2 and connects to the information processing apparatus 1, the provision unit 101 provides display information for displaying an initial screen on the terminal 2 (A101). Although authentication processing or the like is performed when the terminal 2 is connected, a description thereof will be omitted here. As an initial screen displayed on the terminal 2, for instance, a main screen 201 and an evaluation icon 202 are displayed on the touch panel 23 of the terminal 2 shown in FIG. 6. FIG. 6 is a diagram showing an example of the display screen shown on the terminal 2.

A registration button 211 and a termination button 212 are displayed on the main screen 201. The registration button 211 is a button for the evaluator to instruct registration of the evaluator information, and the termination button 212 is a button for the evaluator to instruct termination of evaluation of the advertisement, etc.

When the evaluator presses the registration button 211 while the registration button 211 is displayed on the main screen 201, the terminal 2 notifies the information processing apparatus 1 of a registration request for the evaluator information in response to the operation. Then, in the information processing apparatus 1, the reception unit 102 receives the registration request, and in response, the provision unit 101 provides the terminal 2 with display information for displaying a registration screen (not shown) of the evaluation information (A102). Then, when the evaluator operates the terminal 2 and inputs or deletes the evaluator information by referring to the registration screen, and instructs registration, the reception unit 102 receives the registration information, and allows the management unit 104 to manage the registration information as evaluator information (A103).

When the evaluator selects and presses one of the 202 evaluation icons on the initial screen, the terminal 2 notifies the information processing apparatus 1 of this operation as a request to start evaluation of the advertisement. At this time, selection information indicating whether the evaluator selected one of the evaluation icons 202 is also notified together with the start request. In the information processing apparatus 1, when the reception unit 102 receives the start request, an advertisement to be provided is selected based on the selection information of the evaluation icon 202 (A104). The selection information indicates whether the evaluator selected one of the evaluation icons 202, and in an example shown in FIG. 6, it is possible to determine which one of "sunny," "sunny/cloudy," "cloudy," "rainy" or "heavy rain" is selected. The "sunny", "sunny/cloudy", "cloudy", "rainy", or "heavy rain" of the evaluation icons 202 correspond to moods "best", "good", "normal", "bad", or "worst", which are emotions, respectively. Therefore, the evaluation icon 202 may be represented by a character or a number instead of a symbol.

The selection of advertisement is determined, for example, by providing an evaluator in the worst mood with advertisements that focus on how they would rate if they were in the worst mood, or by randomly selecting advertisement, in either case, the mood of the evaluator managed by the management unit 104 as part of the evaluation.

Subsequently, the provision unit 101 provides the selected advertisement to the terminal 2 (A105). Further, while the provision unit 101 is providing the advertisement, the reception unit 102 receives an evaluation of the advertisement from the terminal 2 (A106).

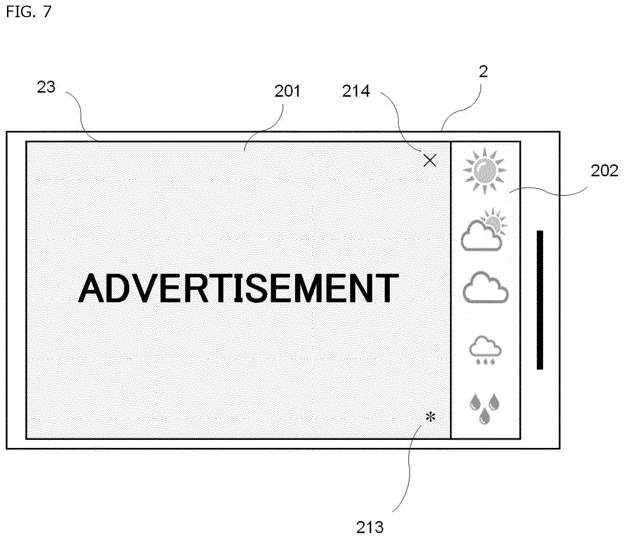

While the provision unit 101 is providing the advertisement, the advertisement is displayed on the main screen 201, as shown in FIG. 7. FIG. 7 is a diagram showing an example of a display screen shown on the terminal 2. Moreover, while the provision unit 101 is providing the advertisement, the evaluation icon 202 is displayed on the terminal 2, and the evaluator can select the evaluation icon 202 as the evaluation for the advertisement. Therefore, the evaluation that is received by the reception unit 102 is information indicating whether the evaluator has selected any one of the evaluation icons 202. A comment icon 213 and a termination icon 214 are also displayed on the main screen 201. The comment icon 213 is an icon operated by the evaluator when requesting input of a comment, and the termination icon 214 is an icon operated by the evaluator when requesting termination of the evaluation of the advertisement.

When the provision of the advertisement is terminated, if the reception unit 102 receives a request for inputting comment during the provision of the advertisement, the provision unit 101 provides the terminal 2 with a comment input screen, which is not shown in the figure, and the reception unit 102 receives the input comment as part of the evaluation information (A107). Then, the calculation unit 103 calculates a point with respect to the evaluation of the advertisement (A108).

The provision unit 101 then selects an advertisement to be provided next according to the last emotion selected by the evaluator (A104) and repeats the same processing. Of course, the provision unit 101 may randomly select an advertisement regardless of the emotion of the evaluator.

On the other hand, when the reception unit 102 receives a request to terminate the evaluation of the advertisement during the provision of the advertisement (A109), the provision unit 101 interrupts the provision of the advertisement and allows the initial screen to be displayed on the terminal 2.

In addition, when the evaluator presses the termination button 212 while the termination button 212 is displayed on the initial screen, i.e., the main screen 201, on the terminal 2, the information processing apparatus 1 terminates the processing with respect to the terminal 2.

Although a case in which the calculation unit 103 calculates the point each time the evaluator evaluates one advertisement is described here, the point may be calculated at a different time, for example, at each login.

### 6. Operation example of information processing apparatus 1

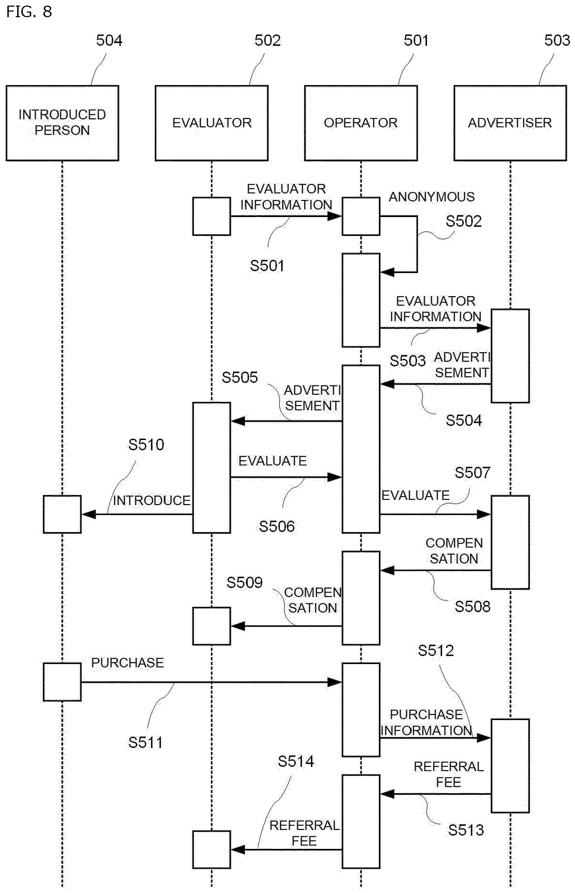

Next, an operation example of the information processing apparatus 1 will be described. FIG. 8 is a sequence diagram for illustrating the operation example of the information processing apparatus 1. In the following description, a person that operates the information processing apparatus 1 is referred to as an operator 501, a person that operates the terminal 2 and evaluates an advertisement is referred to as an evaluator 502, and a person that requests the operator 501 to evaluate the advertisement is referred to as an advertiser 503. In addition, an acquaintance or the like of the evaluator 502 is referred to as an introduced person 504.

First, when the evaluator 502 registers his/her own evaluator information in the information processing apparatus 1 (S501), the operator 501 operating the information processing apparatus 1 anonymizes registered evaluator information (S502) and notifies the advertiser 503 (S503). The notification of evaluator information may not be performed at this timing but may be performed together with a notification of evaluation (S507) at a later stage.

On the other hand, when the advertiser 503 hands over the advertisement that he/she wants to receive evaluation to the operator 501 (S504), the operator 501 provides the advertisement to the evaluator 502 using the information processing apparatus 1, and the evaluator 502 evaluates the provided advertisement by operating the terminal 2 (S507). The evaluation is communicated to the advertiser (S507). At this time, the operator 501 processes the evaluation by statistical processing, etc., as necessary.

The advertiser 503 that has obtained the evaluation pays compensation to the operator 501 for the evaluation (S508). Then, the operator 501 pays a part of the compensation obtained from the advertiser 503 to the evaluator 502 as consideration for the evaluation (S509).

On the other hand, if the evaluated advertisement is an advertisement for a product, the evaluator 502 introduces the product to the introduced person 504 (S510). Then, if the introduced person 504 that received the introduction purchases the product from the operator 501 (S511), purchase information is notified by the operator 501 to the advertiser 503 (S512), and the advertiser 503 pays a referral fee to the operator 501 (S513). Then, the operator 501 pays to the evaluator 502 an amount obtained by deducting a commission, etc. from the referral fee as a referral fee (S514).

### 7. Other

The present invention may be provided in each of the following aspects.

The information processing apparatus, wherein: the evaluator information includes a plurality of items, including an item for which registration is optional, and the calculation unit is configured to add a point to be given to the evaluator according to a number of registered item in the evaluator information.

The information processing apparatus, wherein: the evaluator information includes a plurality of items with weighting respectively, and the calculation unit is configured to add a point to be given to the evaluator according to a sum of weight corresponding to the registered item in the evaluator information.

The information processing apparatus, wherein: the reception unit is configured to receive emotion of the evaluator as at least part of the evaluation.

The information processing apparatus, wherein: the provision unit is configured to determine an advertisement to be provided next based on the emotion of the evaluator.

The information processing apparatus, wherein: the provision unit is configured to provide the terminal with display information that allows an icon, representing different emotion respectively, to be displayed, and the reception unit is configured to receive an operation with respect to the icon at the terminal as at least part of the evaluation.

The information processing apparatus, wherein: the reception unit is configured to receive an operation with respect to the icon at the terminal as a request to start providing an advertisement.

The information processing apparatus, wherein: the reception unit is configured to receive any comment input to the terminal as at least part of the evaluation.

A program, wherein: the program allows a computer to function as the information processing apparatus.

A program that allows a computer to function as an advertisement evaluation apparatus, the advertisement evaluation apparatus comprising: a presentation unit configured to present an advertisement provided by an information processing apparatus; and a notification unit configured to display a plurality of icons representing different emotions respectively, thereby providing the information processing apparatus with an operation with respect to the icon as an evaluation of the advertisement.

Of course, the above aspects are not limited thereto.

Furthermore, the present invention may be provided as a computer-readable non-temporary recording medium that stores the program.

### REFERENCE SIGNS LIST

1: Information processing apparatus
2: Terminal
3: Network
11: Processing unit
12: Storage unit
13: Temporary storage unit
14: External apparatus connection unit
15: Communication unit
16: Communication bus
21: Presentation unit
22: Notification unit
23: Touch panel
101: Providing unit
102: Reception unit
103: Calculation unit
104: Management unit
105: Advertisement storage unit
201: Main screen
202: Evaluation icon
211: Registration button
212: Termination button
213: Comment icon
214: Termination icon
501: Operator
502: Evaluator
503: Advertiser
504: Introduced person

## Claims

1. An information processing apparatus configured to receive an evaluation of an advertisement that can be distributed via a network, comprising:
a provision unit configured to sequentially provide a plurality of advertisements to a terminal used by an evaluator;
a reception unit configured to receive, from the terminal, a registration of evaluator information in relation to the evaluator and an input of evaluation with respect to the advertisement; and
a calculation unit configured to calculate a point to be given to the evaluator based on a number of the evaluation and the evaluator information.

2. The information processing apparatus according to claim 1, wherein:
the evaluator information includes a plurality of items, including an item for which registration is optional, and
the calculation unit is configured to add a point to be given to the evaluator according to a number of registered item in the evaluator information.

3. The information processing apparatus according to claim 1, wherein:
the evaluator information includes a plurality of items with weighting respectively, and
the calculation unit is configured to add a point to be given to the evaluator according to a sum of weight corresponding to the registered item in the evaluator information.

4. The information processing apparatus according to any one of claims 1 to 3, wherein:
the reception unit is configured to receive emotion of the evaluator as at least part of the evaluation.

5. The information processing apparatus according to claim 4, wherein:
the provision unit is configured to determine an advertisement to be provided next based on the emotion of the evaluator.

6. The information processing apparatus according to claim 4 or 5, wherein:
the provision unit is configured to provide the terminal with display information that allows an icon, representing different emotion respectively, to be displayed, and
the reception unit is configured to receive an operation with respect to the icon at the terminal as at least part of the evaluation.

7. The information processing apparatus according to claim 6, wherein:
the reception unit is configured to receive an operation with respect to the icon at the terminal as a request to start providing an advertisement.

8. The information processing apparatus according to any one of claims 1 to 7, wherein:
the reception unit is configured to receive any comment input to the terminal as at least part of the evaluation.

9. A program, wherein:
the program allows a computer to function as the information processing apparatus according to any one of claims 1 to 8.

10. A program that allows a computer to function as an advertisement evaluation apparatus, the advertisement evaluation apparatus comprising:
a presentation unit configured to present an advertisement provided by an information processing apparatus; and
a notification unit configured to display a plurality of icons representing different emotions respectively, thereby providing the information processing apparatus with an operation with respect to the icon as an evaluation of the advertisement.
